# EUROPEAN PATENT SPECIFICATION

(11) **EP 0 447 174 B1**
(45) Date of publication and mention of the grant of the patent: **21.02.1996**
(21) Application number: 91302046.7
(22) Date of filing: 12.03.1991
(51) Int. Cl.: G01N 30/46, G01N 30/84, G01N 33/00

(54) **High speed vapor detection with low temperature bypass**
Schnelle Dampfdetektion mit Tieftemperaturbypass
Détection rapide de vapeurs avec dérivation de température basse

(30) Priority: 12.03.1990 US 491994
(43) Date of publication of application: 18.09.1991
(73) Proprietor: THERMEDICS, INC., Woburn Massachusetts 01888-1799 (US)
(72) Inventor: Rounbehler, David P., Bedord, Massachusetts 01730 (US); Lieb, David P., Lexington, Massachusetts 02173 (US)
(74) Representative: Brunner, Michael John

(56) References cited:
- EP-A- 0 306 332
- US-A- 3 996 009
- US-A- 4 234 315

## Description

This invention relates to selective detection of vapors and more particularly to improved high speed gas chromatographic analyses for detecting vapors of specific compounds, especially certain nitrogen-containing compounds.

Chromatography is commonly utilized to provide timewise separation of constituents of gas or liquid samples as part of analyses in which specific compounds are detected. The timewise separation achieved among constituents permits particular compounds to be distinguished from potential interferents and from other specific compounds of interest by signal peaks which occur at distinct times as the output of detectors downstream of the gas or liquid chromatograph. The times of interest, and amplitude and even shape of the signals of interest, can be predetermined by calibrations using samples of known composition, and detection systems containing the chromatographs can be electronically programmed to provide alarms or specific responses upon detection of each compound of interest.

A gas chromatographic analysis method and apparatus is disclosed in US-A- 4 234 315, comprising a first gas chromatograph, a first detector, a second gas chromatograph and a second detector connected successively in series.

Gas chromatographic (GC) systems have proven quite useful in analysis of samples containing vapors or gases of unknown composition. Recently-developed GC systems can separate and detect certain substances within a sample rather quickly and accurately. However, further improvements are desirable, particularly in the selectivity and sensitivity of such GC systems.

Accordingly, it is an object of the invention to provide an improved high speed vapor detection GC system and method.

It is an object of the invention to provide an improved system for selectively detecting specific nitrogen-based compounds.

It is a particular object of the invention to provide a high speed vapor detector configured to detect different compounds during two discrete intervals of time and having improvements which eliminate potential interferents during at least one of the detection intervals.

It is also an object of the invention to provide a highly selective and sensitive apparatus and method for improved high speed detection of vapors of nitro-compounds such as explosives.

The invention is an improved method and apparatus for high speed, selective detection of vapors of specific compounds. The apparatus has a first gas chromatograph (GC1), a first pyrolyzer, a second gas chromatograph (GC2), and a second pyrolyzer connected successively in series for processing a gas sample containing vapors of compounds to be detected such as nitrogen-containing explosives. According to the invention a flow splitter is included in the apparatus for directing a portion of the effluent of the first gas chromatograph through a bypass branch rather than into the second gas chromatograph. The portion of gas sample diverted into the bypass branch flows through a third pyrolyzer and into a specific gas detector. The remaining portion is, by action of a valve, either passed into the specific gas detector, preferably in combination with the flow from the bypass branch, or is vented through a vacuum pump. Rapid heating of the gas chromatographs at successive intervals of time, with the valve switched to different positions, permits detection of the specific gas at predetermined times and hence identification of compounds from which the specific gas was produced.

In the detection of specific nitrogen-containing compounds such as certain explosives, vapors of nitrogen-containing compounds are directed along with a carrier gas into the first gas chromatograph for separation. The first pyrolyzer is heated to a temperature such that separated vapors of nitramines and nitrite esters, if present in a gas sample passed through the first pyrolyzer in a first time interval as a result of, and typically during, rapid heating of the first gas chromatograph, decompose to produce nitric oxide (NO) gas and nitrogen dioxide (NO₂) gas. The NO₂ gas in the portion diverted into the bypass branch is converted to NO in the third pyrolyzer, without producing additional NO or NO₂ from other compounds which might interfere with detection of compounds from which the NO and NO₂ was generated in the first pyrolyzer. NO gas from the bypass branch then is rapidly detected in the NO detector without risk of interferences from decomposition of compounds in the high temperature second pyrolyzer, whose effluent is vented through a vacuum pump during the first time interval. The resulting NO signals from the detector are used to identify specific nitrogen-containing compounds. Both selectivity and sensitivity of detection of nitrogen-containing compounds in the first time interval are increased over results obtained without the bypass branch.

During a second time interval the second gas chromatograph (GC2) is rapidly heated, and separated vapors released from GC2 are decomposed in the second (higher temperature) pyrolyzer to produce NO from nitrogen-containing compounds to be detected. The effluent of the second pyrolyzer, either alone or combined with the effluent of the bypass branch, is directed to the NO detector and the resulting NO signals at predetermined times during the second time interval indicate the presence and identity of the nitrogen-containing compounds from which the NO was produced in the second pyrolyzer.

In a preferred vapor detection system according to the invention the flow splitter for diverting part of the effluent from GC2 to the bypass branch is a simple "T" connection between the first pyrolyzer and the second gas chromatograph. The bypass branch also includes a flow controller such as a length of tubing whose resistance helps determine the fraction of flow passing through the bypass branch. The third pyrolyzer desirably includes gas-contacting surfaces containing silver. A preferred version comprises a silver tube, and is operable at a relatively low temperature - e.g., in the range of about 140°C to 200°C - to reduce NO₂ to NO without producing NO from other vapors of nitrogen-containing compounds which could interfere with detection of the specific compounds to be detected during the first time interval.

### Brief Description of the Drawing

Fig. 1 is a block diagram of a vapor detection system according to a preferred embodiment of the invention.

Fig. 2 is a sketch illustrating NO signals which would typically be produced in the vapor detection system of the invention.

Fig. 3 is a block diagram of a vapor detection system according to a preferred embodiment of the invention such as that of Fig. 1 but showing additional components.

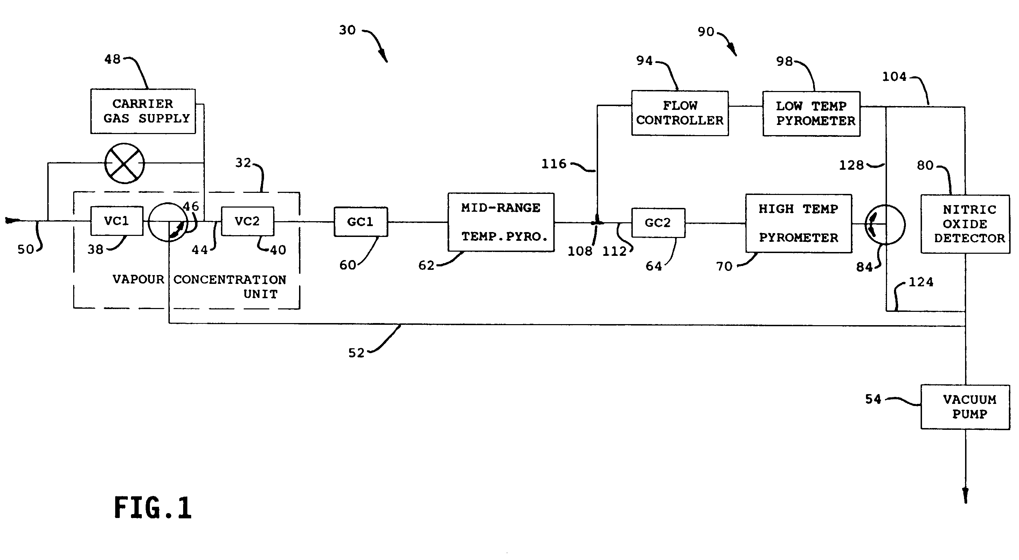

Fig. 1 is a block diagram illustrating the major components of an improved vapor detection system 30 according to the present invention. The system 30 is shown as including a detector for nitrogen-containing compounds, particularly those containing one or more NO₂ groups such as nitrogen-based explosives. However, its principles may be applicable to other compounds through the use of specific gas detectors other than NO detectors.

The system 30 includes several series-connected components through which vapors contained in a gas sample are directed. The vapors are successively concentrated, separated in gas chromatographs, and heated in pyrolyzers to produce specific gases. Detection of the specific gases such as nitric oxide (NO) at distinct times in turn permits detection of the compounds from which the gas was produced.

As used herein, the term "vapors" means materials not only in the gas phase but also in the form of aerosols and fine suspensions of particles. Such vapors may be present in ambient air in minute quantities (e.g., 0.1 parts explosives per trillion parts air or less) or readily stripped from surfaces and collected by passing air over the surface with or without heating and/or contacting the surface with air jets. The vapors of interest for detection according to the present invention are those which may be selectively retained and separated in high speed gas chromatographs. The term "gas sample" is used herein to refer a mixture of vapors and either air or another carrier gas (e.g., hydrogen or helium).

An understanding of the benefits provided by the vapor detection system 30 and particularly by its bypass branch is facilitated by knowledge of the operation of its series-connected, dual arrangements of gas chromatographs and pyrolyzers. It should be kept in mind in the following explanation of those components that an important feature of the system 30 is its capability of rapidly analyzing samples - e.g., in about thirty seconds or less (ten seconds or less beginning with the injection of a sample into its first gas chromatograph).

Initially, gas samples to be analyzed for the presence of specific vapors such as nitrogen-based explosives (e.g., TNT, nitroglycerin) may contain vapors at concentrations too low for rapid, accurate analyses. Accordingly, the vapor detection system 30 desirably includes a vapor concentration unit 32 which traps and concentrates vapors from a flow of air or carrier gas passed through it. As illustrated in Fig. 1, a preferred vapor concentration unit 32 comprises two vapor concentrators VC1 38 and VC2 40 connected by a flow line 44 in which a valve 46 is provided. Each of the vapor concentrators VC1 38 and VC2 40 is connected to a carrier gas supply 48 which supplies to the concentrators a gas such as hydrogen. The vapor concentration unit 32 is typically operated by first passing an air sample (a sample which may have been produced by first trapping vapors in a collector then desorbing vapors into a flow of air passed through the collector) along an inlet flow line 50 into the VC1 38, with the effluent of VC1 38 (air and non-trapped constituents) being passed along an exhaust line 52 to a vacuum pump 54. The valve 46 is then switched to permit flow communication between the VC1 38 and the VC2 40 (of smaller internal volume). Vapors are then flashed from the VC1 38 and carried by carrier gas from the supply 48 into the VC2 40 where they are trapped and thus further concentrated.

Preferred vapor concentrators of the detection system 30 each include a small diameter tube such as, in the case of VC2 40, a 0.32 mm ID quartz capillary GC tube about 5 inches (1 inch = 0,0254 m) in length and whose inner surface has a thin coating (e.g., 1-3 microns) of a gas chromatographic material such as polymerized silicone (e.e. DB 5 available from J&W Scientific of Folsom, California). The capillary tube is threaded through, or tightly encased in, a needlestock metal tube whose outer surface is in contact with a cooled mass. This mass - a e.g., block of metal in thermal contact with a thermoelectric cooler - normally maintains the metal tube, and hence inner capillary tube, of the vapor concentrator 40 at or below room temperature (e.g., at a temperature such as about 10° C) so that the GC coating will trap vapors from gas samples directed through the capillary tube. The outer metal tube is also connected to a source of electric power for controlled, very rapid resistance heating of the metal tube - for example, from about 10°C to 250°C in about one second. This very rapid heating, preferably accomplished automatically under programmed control in which resistance of the tube is continually monitored and employed as a feedback parameter in controlling the power applied to the tube and hence the temperatures attained, in turn heats the GC coating within the capillary tube to release or flash the vapors into a flow of carrier gas directed through the capillary tube. Such carrier gas may in certain applications be air, a principal advantage of which is its ready availability. However, air has been found less suitable than other gases for analyses of nitrogen-containing compounds requiring high sensitivity, selectivity, and speed because of its impurities and relatively high molecular weight, and because its oxygen content may foster undesirable reactions. preferred carrier gases are those which are pure, lightweight, and non-reactive with the compounds to be detected or with their thermal decomposition products or with other compounds which are likely to be present in gas samples. Hydrogen, furnished under pressure to the vapor concentrator 40 from the carrier gas supply 48, is a preferred carrier gas for use in analysis of nitrogen-containing compounds such as explosives. It has been found safe even when flowing (at low pressures) through a chemiluminescence-based NO detector supplied with ozone as one reactant. Helium is also suitable as a carrier gas.

After vapors have been transferred to and trapped within the VC2 40, this vapor concentrator is flash-heated while carrier gas is flowing through VC2 40. Vapors are swept out of VC2 40, without decomposition of compounds of interest, and are rapidly passed or "injected" into a first gas chromatograph 60 (GC1 60). The GC1 selectively retains and separates vapors of specific compounds both from other compounds to be detected and from compounds not of interest.

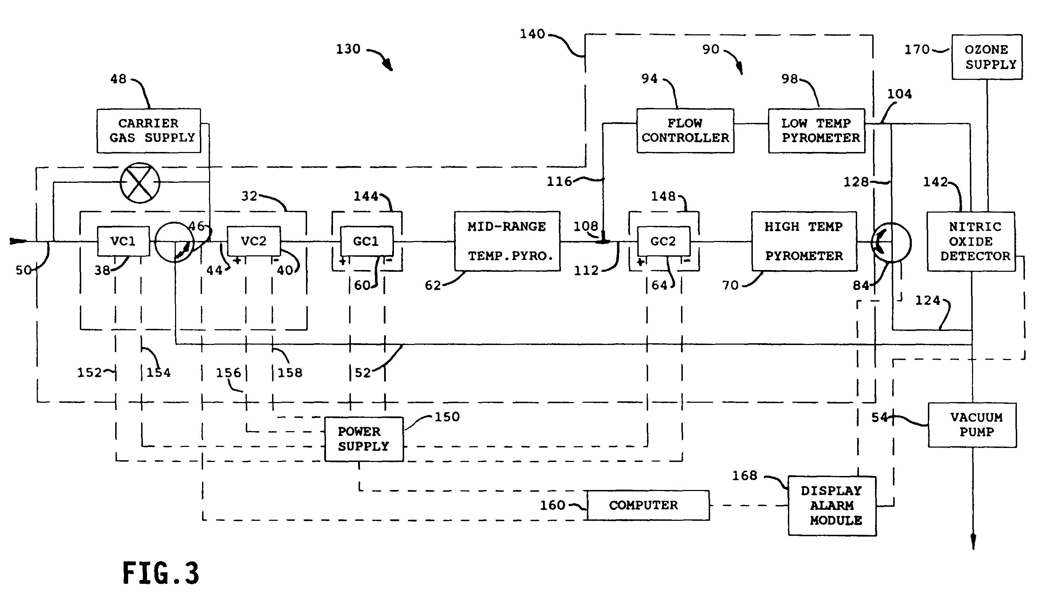

GC1 60 and a second gas chromatograph 64 (GC2 64) which receives the effluent of GC1 60 after its passage through a mid-range temperature pyrolyzer 62, may have a construction similar to that of the vapor concentrator 38 except they are typically coiled and are substantially longer. Typical lengths of GC1 60 and GC2 64 are two to ten feet (1 foot = 0,3048 m). Also, GC1 60 and GC2 64 are preferably maintained at temperatures somewhat higher (e.g., at 80°C to 120°C) than the vapor concentrator 38 by ovens (Fig. 3), except for brief intervals when their temperatures are rapidly increased by application of electrical power to the metal tubes encasing their GC capillary columns. When the temperature of GC1 60 is "ramped up" - for example from about 95°C to 300°C in a 3-4 second interval, vapors which have been retained and are undergoing timewise separation after being received from the vapor concentrator 38 rapidly emerge in separated form from GC1 60 and pass to the mid-range temperature pyrolyzer 62. The same effect is later produced, by controlled heating of GC2 64, on separable vapors which have been received for selective retention and separation in undecomposed form from the mid-range temperature pyrolyzer 62.

The mid-range temperature pyrolyzer 62 may comprise a short (e.g., six-inch) portion of the (capillary tube) flow line between GC1 60 and GC2 64. The pyrolyzer 62, however, is preferably continuously heated to a temperature sufficient to decompose a first set of specific compounds, if present in the vapors contained in a gas sample, without decomposing vapors of a second set of (more thermally stable) compounds. For example, in the detection of certain nitrogen-containing explosives, the mid-range temperature pyrolyzer 62 may be maintained, as by electrical heating, at a temperature of about 400°C. At this temperature, explosives vapors which are nitramines and nitrite esters (compounds having, respectively, N-NO₂ or O-NOₓ (x = 1, 2) in their structural formulas-e.g., nitroglycerin (NG), ethylene glycol dinitrate (EGDN), pentaerythritol tetranitrate (PETN), and the nitramines HMX and RDX - readily decompose to produce nitric oxide (NO) gas and nitrogen dioxide (NO₂) gas when passed through the pyrolyzer 62 at flow rates of about one cubic centimeter per second. However, explosives of a second set of compounds known as C-nitro compounds (compounds having C-NOₓ (x = 1, 2) in their structural formulas - e.g., dinitrotoluene (DNT) and trinitrololuene (TNT)) and other organic nitrogen-containing compounds such as perfumes, paint residues, etc. which are potential interferents do not decompose when passed through the pyrolyzer tube as vapors in a carrier gas such as hydrogen.

A high temperature pyrolyzer 70, positioned to receive the effluent of GC2 64, may be of a construction similar to that of the mid-range temperature pyrolyzer 62, or may be a quartz or ceramic tube, typically about five to twelve inches in length and having an inner diameter of about one-eighth inch. The high temperature pyrolyzer 70 is maintained at a temperature in the range of about 800°C to 1000°C, typically about 850°C, by a heater. At this temperature vapors of the second set of compounds to be detected (e.g., DNT and TNT), as well as the NO₂ gas produced by decomposition of vapors in the mid-range temperature pyrolyzer 62, decompose to produce NO when contained in gas samples passed through the high temperature pyrolyzer 70.

Nitric oxide gas produced in either of the pyrolyzers 62 or 70 is monitored in a nitric oxide detector 80 whose inlet is in communication with the outlet of the high temperature pyrolyzer 70 through a valve 84. The nitric oxide detector 80 may be any suitable highly sensitive, high speed NO analyzer such as a detector using principles of electron capture, photoionization, or chemiluminescence. A preferred NO detector 80 is an ozone-based chemiluminescence detector similar to those used in Thermal Energy Analyzers (TEA's) available from Thermedics Inc. of Wildwood Street, Woburn, Massachusetts, U.S.A. in which ozone supplied to a reaction chamber (under vacuum such as 1-10 torr (1 torr = 133,3224 Pa) provided by the vacuum pump 54) reacts with NO in a gaseous sample to produce "excited" NO₂. Rapid decay of the excited NO₂ to NO₂ yields radiation detectable by a photodetector. The resulting signals and their times of occurrence permit identification of specific compounds to be detected.

The series-connected, dual GC-pyrolyzer combinations of the vapor detection system 30, permit time-shifting of signals by delaying production (and hence detection) of NO gas by a second set of separable compounds which do not decompose when passed through the mid-range temperature pyrolyzer 62 but do decompose when (later) passed through the high-temperature pyrolyzer 70. This permits NO signals from nitramines and nitrite esters to be generated and appear in a first interval of time prior to the decomposition of other compounds retained in, or slowly migrating through, GC2 64.

The second time interval of detection is initiated by the shifting of the valve 84 and the ramping up of the temperature of GC2 64 . Decomposition of these compounds (e.g., C-nitro compounds such as TNT) in the high temperature pyrolyzer 70 results in generation of additional NO signals in the NO detector 80 in a second interval of time.

The time-shifting of signals provided by the vapor detection system 30 is of considerable utility in high speed selective detection of compounds such as explosives since it reduces, for each time interval, the number of signals among which specific compounds must be identified or distinguished. It also increases the separation between certain signals of interest. For example, specific compounds (nitramines, nitrite esters) whose signals appear in the first interval of time are not masked by signals of other compounds which are time-shifted into the second interval of time.

In addition to enhancing the selectivity of detection by shifting signals for certain compounds (i.e., GC-separable compounds other than nitramines and nitrite esters) to a second detection time interval, the vapor detection system 30 provides further improvements in detection over prior art systems. These improvements are best understood by reference to the system 30 without its bypass branch 90, whose components (a flow controller 94 and a low temperature pyrolyzer 98) and function are described below.

One drawback of a system having series-connected, dual GC-pyrolyzer combinations but lacking the bypass branch 90 is that it does not time-shift all signals whose presence could interfere with detection of a specific compounds. In particular, interferences to detection of certain nitrogen-containing compounds such as explosives may arise from compounds which a) are poorly or ineffectively retained on GC1 60 and GC2 64 at their normal operating temperatures, b) do not decompose in passing through the mid-range temperature pyrolyzer 64, and c) do decompose in passing through the high temperature pyrolyzer 70. Such compounds may produce signals which show up as interferences in the first time interval of detection. These interferences can occur if the total time for such compounds (e.g., perfumes, paint additives, nitrobenzenes) to reach the high temperature pyrolyzer 70, and then to reach the detector 80 as NO, is nearly equal to the time of arrival of NO for any of the first set of specific compounds. Moreover, such compounds, in addition to producing signals at specific times which conflict with detection, can generate significant amounts of background noise and restrict the sensitivity of detection to levels below those desired.

Certain of the above-noted interferences could be avoided, at least in part, by introduction of a time delay after passage of a sample into, but prior to the heating of, GC1 60. However, this would be quite undesirable for high speed analyses since such delays would directly increase the overall detection time by the length of the time delay.

The inclusion in the vapor detection system 30 of the invention of the bypass branch 90 avoids such interferences without the need for an additional time delay. The bypass branch 90 diverts a portion of the effluent of the mid-range temperature pyrolyzer 62 so that it bypasses the second gas chromatograph GC2 64 and the high temperature pyrolyzer 70. Gases and vapors directed through the bypass branch 90 and which then pass to the nitric oxide gas detector 80 along a flow line 104, because they avoid the high temperatures of the pyrolyzer 70, contain decomposition products only of the mid-range temperature pyrolyzer 62 (as further reacted in the low temperature pyrolyzer 98 of the bypass branch 90). Interferences associated with reaction products of the high temperature pyrolyzer 70 are absent, and the vapor detection system 30 also achieves detection times comparable to those of a system without the bypass branch 90.

Diversion of a portion of the effluent of the mid-range temperature pyrolyzer 62, which includes vapors contained in a carrier gas, to the bypass branch 90 may be accomplished by a simple "T" connection 108 in the flow line 112 between GC2 64 and the mid-range temperature pyrolyzer 62 and the operation of the flow controller 94 communicating with the T 108 through a flow line 116. The flow controller 94 helps regulate the fraction of effluent of the pyrolyzer 62 which passes through the bypass branch 90, and may be merely a coiled capillary tube providing a fixed amount of flow resistance. Alternatively, the controller 94 comprises a valve whose setting may be varied so as to allow different amounts of gas flow through the bypass branch 90.

The low temperature pyrolyzer 98 provided as part of the bypass branch 90 functions primarily to reduce to nitric oxide (NO) any NO₂ gas in the effluent received from the mid-range temperature pyrolyzer 62. (This function is also performed by the high temperature pyrolyzer 70 with respect to NO₂ gas in a sample passing through the pyrolyzer 70.) A suitable low temperature pyrolyzer 98 is a tube formed of, or containing, silver and operable at a temperature in the range of about 140°C to 200°C - e.g., at 180°C. A preferred low temperature pyrolyzer 98 comprises a silver tube about twelve inches in length and having an inner diameter of about 0.075 inches and an outer diameter of about one-eighth inch.

The vapor detection system 30 of Fig. 1 is operated to provide 1) a first time interval of detection tt1 in which NO produced in the mid-range temperature pyrolyzer 62 (and also produced by reduction of NO₂) is detected as NO in the nitric oxide detector 80 and 2) a second time interval of detection tt2 in which NO produced in the high temperature pyrolyzer 70 is detected in the nitric oxide detector 80. To control the flow of sample gas to the NO detector 80, the valve 84 downstream of the high temperature pyrolyzer 70 is set so that during the first time interval tt1 flow of effluent from the high temperature pyrolyzer 70 passes only to the vacuum pump 54 along a flow line 124. Hence NO signals from the nitric oxide detector 80 represent NO produced only by decomposition of nitramines and nitrite esters in the mid-range temperature pyrolyzer 62 (and NO from reduction of NO₂ by the low temperature pyrolyzer 98). At the end of the first time interval tt1 the valve 84 is rapidly switched, as by rotating internal elements clockwise ninety degrees as viewed in the diagram of Fig. 1. Effluent of the high temperature pyrolyzer 70 is then fed along a flow line 128 to combine with effluent of the low temperature pyrolyzer 98 and pass to the nitric oxide detector 80, which detects NO during the time interval tt2.

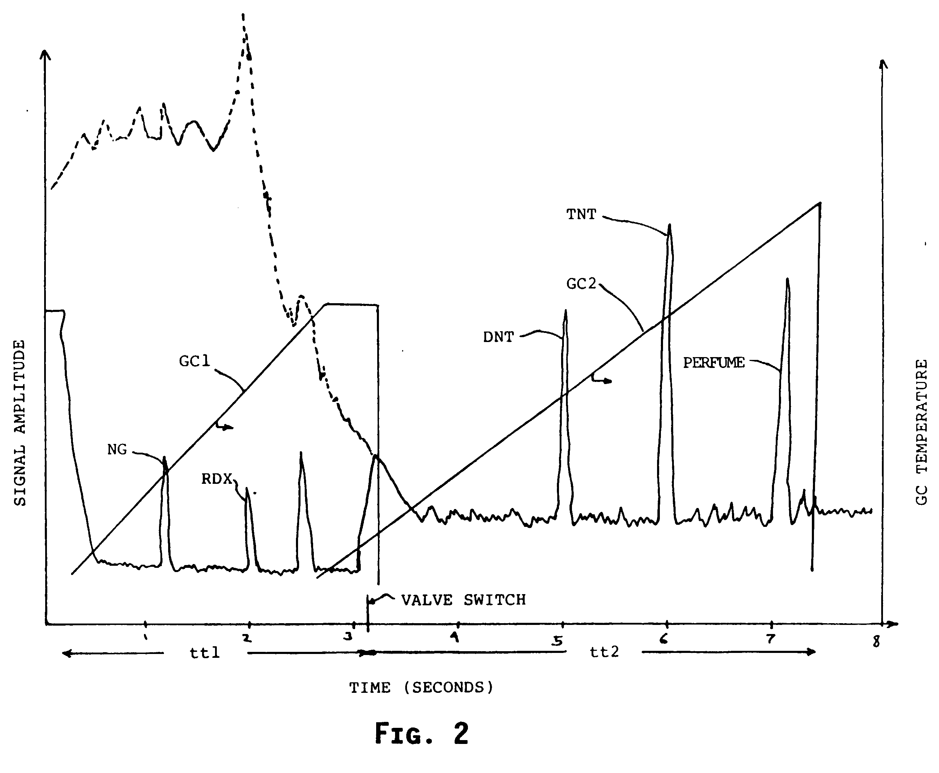

Fig. 2 is a plot of signal amplitude versus time (chromatogram) from an output of the nitric oxide detector 80 which would typically result from an analysis in the vapor detection system 30 of a sample containing vapors of several explosives. The unbroken signal trace reflects output of the system 30 as shown in Fig. 1 while the dashed or broken signal trace reflects output which might typically have resulted during a first time interval tt1 from a system lacking the bypass branch 90 and the valve 84. The sketch also shows temperature ramps (labelled GC1 and GC2 and referenced to a temperature scale at right edge of Fig. 2) associated with typical operation of the first and second gas chromatographs 60 and 64 to achieve rapid separation and release of vapors from GC1 60 and GC2 64.

A comparison between the dashed signal and the unbroken signal of Fig. 2 during the first interval tt1 clearly illustrates the benefits of the bypass branch 90. Operation without the bypass branch 90 (dashed signal) yields a large ill-defined signal trace in which it is difficult to identify individual peaks because of the presence of many other compounds which are flowing through components downstream of GC1 60 undergoing decomposition in the high temperature pyrolyzer 70, and being detected as NO by the nitric oxide detector 80. Signals from compounds of interest, particularly those present in low concentration because their initial collection to form air samples was less favored due to low vapor pressures, may go undetected because they cannot be accurately identified. False alarms also may result.

A substantially cleaner signal (unbroken trace) is produced during the first time interval of detection (tt1) when sample analysis is performed using the system 30 which includes the bypass branch 90. Because the high temperature pyrolyzer 70 is avoided, the large ill-defined (broken) signal is replaced with a trace containing sharply-defined peaks of the explosives of interest (here NG and RDX). Hence the presence or absence of these compounds at predetermined times (detection windows) is easily monitored electronically and verified in chromatograms.

Other compounds of interest (e.g. explosives which are C-nitro compounds such as DNT and TNT) are detected during the second time interval tt2 following the switching of the valve 84 to direct effluent of the high temperature pyrolyzer 70 to the nitric oxide detector 80. As expected, at the beginning of tt2 the unbroken signal trace undergoes a "step" increase to merge with the broken signal trace upon switching of the valve 84. However, since by then most of the compounds not held in GC2 64 have passed through the system 30, the overall signal amplitude has decreased to a level at which individual peaks are readily distinguishable. Detection is also facilitated by the typically larger amplitudes of the DNT and TNT peaks associated with their higher concentrations (due to their higher vapor pressures - hence their ready collection in air samples). These higher peaks readily overcome a somewhat higher level of background signal and noise apparent in the tt2 portion of Fig. 2.

Fig. 3 is a block diagram illustrating some additional components which are included in a preferred embodiment of a vapor detection system 130 of the invention (In Fig. 3 components which are similar or the same as those of the system 30 of Fig. 1 are labelled with the same numerals). The system 130 (Fig. 3) includes an oven 140 enclosing all of the above-described components except the carrier gas supply 48, the valve 84, a chemiluminescence-based NO detector 142, and the vacuum pump 54. The oven 140, preferably an electric oven, provides a constant internal oven temperature at a level such that vapors readily flow without decomposition in a carrier gas along internal flow lines between components. A preferred temperature for the oven 140 for applications in which the system 130 is used in detecting explosives is about 180°C. This temperature matches a suitable temperature to be maintained in the low temperature pyrolyzer 98 so that a separate heater is not needed for the low temperature pyrolyzer 98. Two additional ovens 144 and 148 enclosing GC1 60 and GC2 64, respectively, are also provided within the oven 140. The ovens 144 and 148 maintain GC1 60 and GC2 64 at a constant temperature (e.g., 95°C), except during times when the temperatures of the gas chromatographs are rapidly increased to accelerate the removal of vapors.

One or more power supplies such as the power supply 150 is provided as part of the system 130 to provide electrical power for heating of components such as the vapor concentrators 38 and 40, GC1 60, GC2 64, and the pyrolyzers 62 and 70. The power supply 150 is electrically connected to both ends of the metal tube or sleeve of the vapor concentrators 38 and 40 (as indicated by broken lines 152, 154, 156, and 158) and is programmed under control of a computer 160 with one or more microprocessors to very rapidly (e.g., in one second) and precisely heat the metal sleeves so as to "fire" the vapors held by VC1 38 into VC2 40 and later to fire the vapors held by VC2 40 into GC1 60. The power supply 150 is also connected to metal tubes or sleeves encasing GC1 60 and GC2 64 to rapidly (e.g., within 2-4 seconds) heat these GC's. Other components controlled by the computer 160 include the two-position, high speed valve 84, the valve 46 between the VC1 38 and VC2 40, a display alarm module 168, and other valves controlling flows of gases such as carrier gas and ozone (supplied to the nitric oxide detector 142 if a chemiluminescence-based NO detector is used. In such a system a preferred method of producing ozone is by electrical discharge in an ozonator supplied by oxygen from electrolysis of water, with hydrogen from the electrolysis used as the carrier gas of the supply 48).

In operation of the vapor detection systems 30 and 130, vapors of gas samples to be analyzed are first concentrated by directing the gas sample through the vapor concentration unit 32. At a selected time after vapors have been trapped in the second vapor concentrator 40, and with a carrier gas continuously flowing through the system from the supply 48, the vapor concentrator 40 is very rapidly heated (e.g., in one second to a temperature of 250°C) to release the vapors (substantially without decomposition) and inject them into GC1 60. preferably heating of the vapor concentrator 40 (and of VC1 38 earlier to transfer vapors from VC1 38 to VC2 40) is controlled to obtain desired temperatures by monitoring the resistance of its metal sheath (e.g., by utilizing measurements of the voltage drop which occurs along the tube when a small sensing current is periodically applied). Also, at or prior to the time of firing of the vapor concentrator 40, the valve 84 is set in position to vent effluent from the high temperature pyrolyzer 70 directly through the vacuum pump 54. Shortly thereafter, GC1 60 is rapidly heated (e.g., in ramplike fashion in about 2-3 seconds to a temperature of about 300°C) to quickly move vapors in timewise-separated fashion out of GC1 60 and then into and through the mid-range temperature pyrolyzer 62. As the vapors with carrier gas travel rapidly through the pyrolyzer 62, nitrate esters and nitramines among the vapors are decomposed to produce NO and NO₂, while other compounds such as C-nitro compounds (DNT, TNT) remain intact.

After emerging from the mid-range temperature pyrolyzer 62, the gas sample is split into two portions by the "T" connection 108, with one portion flowing into GC2 64 and the remainder through the flow line 116 and along the remainder of the bypass branch 94 into the nitric oxide detector 80 or 142. The fractional split of the flow is determined primarily by the flow resistances of the various components downstream of the T 108, including that of the flow controller 94. Since higher detection responses are generally obtainable with higher fractions of flow, the effluent of the mid-range temperature pyrolyzer 62 may be divided so that more than half is delivered to the bypass branch 90 if the specific compounds to be detected from the portion of the branch 90 - i.e., during time interval tt1 - are typically present in the gas sample in smaller amounts (e.g., less is present in a collected sample due to lower vapor pressure) than are compounds to be detected in interval tt2. For example, seventy percent of the flow may be directed through the bypass branch 90, with the remaining thirty percent passing into GC2 64.

As the gas sample flows rapidly through the bypass branch 90, NO remains unchanged, NO₂ is reduced to NO in the low temperature pyrolyzer 98, and other nitrogen-containing compounds are not decomposed to yield NO or NO₂. (In particular, compounds which would decompose to produce NO if passed through the high temperature pyrolyzer 70 remain intact so as not to yield potential interferences and increased background noise signals.) The nitric oxide detector 80 or 142 then quickly detects NO, producing signals at specific times during the interval tt1 which are identifiable as one or more specific compounds of interest. Timewise plots or chromatograms of the signals are automatically generated and indicator lights or other alarms may be triggered in response to the signals.

The fraction of gas sample which is directed to GC2 64 instead of to the bypass branch 90 has vapors selectively retained in GC2 64 and these vapors, upon entering GC2 64, begin separating and migrating through GC2 64. The carrier gas, and any NO and NO₂ in the fraction of gas sample applied to GC2 64, pass rapidly through GC2 64 and the high temperature pyrolyzer 70 and during time interval tt1 are vented through the vacuum pump 54. At the end of the time interval tt1, or shortly prior to this, and prior to the time at which separable vapors would emerge from GC2 64 by migration at its normal operating temperature, the valve 84 is switched so that effluent from the high temperature pyrolyzer 70 passes through the flow line 128 and combines with the flow from the bypass branch 90 to enter the nitric oxide detector 80 or 142. During this time interval tt2 heating of GC2 64 quickly moves vapors from GC2 64 in timewise-separated fashion into and through the high-temperature pyrolyzer 70. As the vapors rapidly travel through the high temperature pyrolyzer 70, certain nitrogen-containing compounds such as C-nitros are decomposed to yield NO. Almost immediately thereafter detection signals indicative of these compounds are produced in the NO detector 80 or 142.

The result of the above-noted operating steps is detection of specific compounds which are nitramines and nitrite esters during a first time interval of detection (tt1) and detection of other specific nitro-compounds (C-nitros) during a second time interval of detection (tt2), with typical total detection time of about ten seconds or less. In the preferred vapor detection systems 30 and 130 operated to detect vapors of certain nitrogen-based explosives present in gas samples, nitroglycerin, EGDN, PETN, and RDX may be detected in the first time interval, and DNT and TNT are detected in the second time interval. Because the portion of each sample analyzed during the first time interval does not pass through a high temperature pyrolyzer, interferences and background noise associated with decomposition products of this pyrolyzer are avoided during the first time interval. The vapor detection system and method of the invention thus retain the benefits of time-shifting of signals in enhancing the timewise separation of specific compounds while avoiding additional potential interferences and improving sensitivity of detection during the first time interval.

The above-described embodiments are intended as illustrative and non-limiting, and other embodiments are readily apparent. For example, the effluents of both the high temperature and low temperature pyrolyzers may be controlled by valves and these effluents need not be combined during the second time interval of detection. Also, the valve 84 may be eliminated if a separate NO detector, or separate chamber of a dual-chamber NO detector, is employed to detect NO in each of the effluents. The invention is defined by the claims which follow and includes all embodiments and their equivalents within the scope of the claims.

## Claims

1. Apparatus for selectively detecting vapours of specific compounds in a gas sample, the apparatus comprising:
a first gas chromatograph (60), a first pyrolyzer (62), a second gas chromatograph (64), and a second pyrolyzer (70) connected successively in series;
means (32) for directing a gas sample containing vapours of specific nitrogen-containing compounds into said first gas chromatograph (60);
detecting means (80) connected to said first pyrolyser (62) and to said second pyrolyser (70) for detecting the specific compounds in the effluent of said first pyrolyzer and in the effluent of said second pyrolyzer; and
a flow splitter (108) for receiving the effluent of said first pyrolyzer (62) and for directing first and second portions of said effluent, respectively, to said second gas chromatograph (64) and to said detecting means (80).

2. Apparatus according to claim 1, further including a third pyrolyzer (98); and wherein the flow splitter (108) receives the effluent of said first pyrolyzer (62) and directs first and second portions of said effluent, respectively, to said second gas chromatograph (64) and to said third pyrolyzer (98); and wherein the detecting means (80) detects the specific compounds in the effluent of said third pyrolyzer and in the effluent of said second pyrolyzer.

3. Apparatus as in claim 1 or claim 2, for detecting nitrogen-containing compounds, wherein said detecting means includes a nitric oxide detector (80) connected to said third pyrolyzer (98), and wherein said apparatus further includes
(a) a vacuum pump (54) for providing a partial vacuum within said nitric oxide detector; and
(b) a valve (84) downstream of said second pyrolyzer, said valve being adjustable between a first position in which said valve permits effluent of the second pyrolyzer (70) to pass to said vacuum pump (54) and a second position in which said valve permits effluent of the second pyrolyzer to pass to said nitric oxide detector (80).

4. Apparatus as in any of the preceding claims, including means for controlling the fractions of the effluent of said first pyrolyzer comprising said first and second portions.

5. Apparatus as in any of the preceding claims, wherein said first pyrolyzer (62) includes a heater operable to heat a gas sample directed through said first pyrolyzer such that vapours of a first set of the specific compounds in the gas sample are decomposed without producing decomposing vapours of a second set of specific compounds in the gas sample.

6. Apparatus as in claim 5, wherein said second pyrolyzer (70) includes a heater operable to heat a gas sample directed through said second pyrolyzer such that said second set of specific compounds in the gas sample are decomposed.

7. Apparatus as in any of the preceding claims, wherein said means for directing a gas sample into said first gas chromatograph includes
(a) a vapour concentrator (32) whose outlet is in communication with the inlet of said first gas chromatograph and
(b) means for very rapidly heating said vapour concentrator while a carrier gas is flowed through said vapour concentrator such that vapours of specific nitrogen-containing compounds are released from the vapour concentrator and rapidly passed with said carrier gas into said first gas chromatograph.

8. Apparatus as in claim 7, further including means for rapidly heating said first (60) and second (64) gas chromatographs for effecting rapid, time-wise separated removal of vapours contained in said gas chromatographs.

9. Apparatus as in any of the preceding claims, wherein said specific compounds are nitrogen-containing compounds and the means (80) for detecting specific compounds comprises a nitric oxide (NO) detector, and wherein said third pyrolyzer (98) includes means for reducing NO₂ gas in a gas sample directed therethrough to NO gas without producing NO gas from other compounds contained in said gas sample.

10. Apparatus as in claim 9 when dependant on claim 2, wherein said third pyrolyzer (98) includes an internal surface containing silver.

11. Apparatus as in claim 10, wherein said third pyrolyzer (98) includes a tube formed of silver.

12. Apparatus as in claim 3 or any claim dependent thereon, comprising
a bypass branch (90) including said third pyrolyzer (98), a first flow line (116) extending between said flow splitter (108) and the inlet of said third pyrolyzer, and a second flow line (104) extending between the outlet of said third pyrolyzer and the inlet of said nitric oxide detector (80); and,
a third flow line (128) connected to the outlet of said valve and joining said second flow line (104).

13. A method of selectively detecting specific gas chromatographically-separable compounds comprising the steps of:
injecting into a first gas chromatograph (60) a gas sample comprising a carrier gas and vapours of a first set and a second set of gas chromatographically-separable compounds;
removing the gas sample with separated vapours from the first gas chromatograph;
heating (62) the separated gas sample sufficiently to decompose vapours of the first set without decomposing vapours of the second set;
splitting (108) the heated gas sample into first and second fractions;
directing the second fraction of said heated gas sample into a second gas chromatograph (64);
detecting (80), during a first time interval, the first set of compounds in said first fraction;
removing the second fraction with separated vapours from the second gas chromatograph;
heating (70) the separated second fraction sufficiently to decompose vapours of said second set; and
detecting (80), during a second time interval, the second set of compounds in said separated second fraction.

14. A method as in claim 13, wherein said first set of compounds comprise nitramines and nitrite esters and including, following the heating of the separated gas sample and prior to the detection of the first set of compounds, converting NO₂ gas in the first fravction to NO gas by passing said first fraction through a tube having a gas-contacting surface containing silver and maintained at a predetermined temperature.

15. A method as in claim 14, wherein the converting step includes passing said first fraction through a tube formed of silver.

16. A method as in claim 13, including concentrating vapours of the compounds in a tube having gas chromatographic material therein prior to the injecting step and wherein the injecting step comprises rapidly and precisely heating the tube and the gas chromatographic material while the carrier gas is flowing through the tube.

17. A method as in any of claims 13 to 15, wherein said removal steps each include rapidly heating said gas chromatographs.

18. A method as in any of claims 13 to 17, wherein all of the steps of said selective detection method are performed in a total time of less than thirty seconds.

19. A method as in any of claims 13 to 18, wherein the second fraction with separated vapours is removed from said second gas chromatograph (64) by rapidly heating said second gas chromatograph during said second time interval.

20. A method as in any of claims 13 to 19, wherein said heating of said separated gas sample and the heating of said separated second fraction are performed in first (62) and second (70) pyrolyzers, respectively, and the splitting of said heated gas sample is performed in a flow splitter (108) positioned between said first pyrolyzer and said second gas chromatograph (64).

21. A method as in claim 14, wherein said detection steps are performed in a single NO detector (80) and the method includes passing the effluent of the silver-containing tube to the NO detector during said first time interval and passing the effluent of both the silver-containing tube and the second pyrolyzer (70) to the NO detector during said second time interval.

## Patentansprüche

1. Vorrichtung zum selektiven Nachweis (Bestimmung) von Dämpfen(Gasen) spezifischer Verbindungen in einer Gasprobe, die umfaßt:
einen ersten Gaschromatographen (60), einen ersten Pyrolysator (62), einen zweiten Gaschromatographen (64) und einen zweiten Pyrolysator (70), die aufeinanderfolgend in Reihe miteinander verbunden sind;
eine Einrichtung (32) zum Einführen einer Gasprobe, die Dämpfe (Gase) spezifischer Stickstoff enthaltender Verbindungen enthält, in den genannten ersten Gaschromatographen (60);
eine mit dem genannten ersten Pyrolysator (62) und dem genannten zweiten Pyrolysator (70) verbundene Detektor-Einrichtung (80) zum Nachweis der spezifischen Verbindungen in dem Abstrom aus dem genannten ersten Pyrolysator und in dem Abstrom aus dem genannten zweiten Pyrolysator; und einen Gasstrom-Splitter (108) für die Aufnahme des Abstroms aus dem genannten ersten Pyrolysator (62) und zum jeweiligen Einführen eines ersten Teils und eines zweiten Teils des genannten Abstroms in den genannten zweiten Gaschromatographen (64) bzw. in die genannte Detektor-Einrichtung (80).

2. Vorrichtung nach Anspruch 1, die außerdem einen dritten Pyrolysator (98) enthält und in der der Gasstrom-Splitter (108) den Abstrom aus dem genannten ersten Pyrolysator (62) aufnimmt und jeweils einen ersten Teil und einen zweiten Teil des genannten Abstroms in den genannten zweiten Gaschromatographen (64) bzw. in den genannten dritten Pyrolysator (98) einführt; und worin die Detektor-Einrichtung (80) die spezifischen Verbindungen in dem Abstrom aus dem genannten dritten Pyrolysator und in dem Abstrom aus dem genannten zweiten Pyrolysator nachweist (bestimmt).

3. Vorrichtung nach Anspruch 1 oder 2 für den Nachweis (die Bestimmung) von Stickstoff enthaltenden Verbindungen, worin die Detektor-Einrichtung einen Stickoxid-Detektor (80) umfaßt, der mit dem genannten dritten Pyrolysator (98) verbunden ist und worin die genannte Vorrichtung außerdem enthält
a) eine Vakuumpumpe (54) zur Erzeugung eines Teilvakuums innerhalb des genannten Stickoxid-Detektors; und
b) ein Ventil (84) stromabwärts von dem genannten zweiten Pyrolysator, das zwischen einer ersten Position, in welcher das genannte Ventil das Passieren des Abstroms aus dem zweiten Pyrolysator (70) in die genannte Vakuumpumpe (54) erlaubt, und einer zweiten Position, in der das genannte Ventil das Passieren des Abstroms aus dem zweiten Pyrolysator in den genannten Stickoxid-Detektor (80) erlaubt, einstellbar ist.

4. Vorrichtung nach einem der vorhergehenden Ansprüche, die umfaßt eine Einrichtung zur Kontrolle der Bruchteile (Fraktionen) des Abstroms aus dem genannten ersten Pyrolysator, der umfaßt den ersten Teil und den zweiten Teil.

5. Vorrichtung nach einem der vorhergehenden Ansprüche, worin der genannte erste Pyrolysator (62) eine Heizeinrichtung umfaßt, mit der eine durch den genannten ersten Pyrolysator geführte Gasprobe so erhitzt werden kann, daß die Dämpfe (Gase) einer ersten Gruppe der spezifischen Verbindungen in der Gasprobe zersetzt werden, ohne daß Zersetzungsdämpfe (-gase) einer zweiten Gruppe von spezifischen Verbindungen in der Gasprobe entstehen.

6. Vorrichtung nach Anspruch 5, worin der genannte zweite Pyrolysator (70) eine Heizeinrichtung enthält, mit der eine durch den genannten zweiten Pyrolysator geführte Gasprobe so erhitzt werden kann, daß die genannte zweite Gruppe von spezifischen Verbindungen in der Gasprobe zersetzt wird.

7. Vorrichtung nach einem der vorhergehenden Ansprüche, worin die genannte Einrichtung zum Einführen einer Gasprobe in den genannten ersten Gaschromatographen umfaßt
a) einen Dampf(Gas)-Konzentrator (32), dessen Auslaß mit dem Einlaß des genannten ersten Gaschromatographen in Verbindung steht, und
b) eine Einrichtung zum sehr schnellen Erhitzen des genannten Dampf(Gas)-Konzentrators, während ein Trägergas durch den genannten Dampf(Gas)-Konzentrator strömt, so daß Dämpfe(Gase) von spezifischen Stickstoff enthaltenden Verbindungen aus dem Dampf(Gas)-Konzentrator freigesetzt werden und zusammen mit dem Trägergas schnell in den genannten ersten Gaschromatographen gelangen.

8. Vorrichtung nach Anspruch 7, die außerdem umfaßt eine Einrichtung zum schnellen Erhitzen des genannten ersten Gaschromatographen (60) und des genannten zweiten Gaschromatographen (64), um einen schnellen, zeitlich getrennten Abzug der in den genannten Gaschromatographen enthaltenen Dämpfe(Gase) zu bewirken.

9. Vorrichtung nach einem der vorhergehenden Ansprüche, worin die genannten spezifischen Verbindungen Stickstoff enthaltende Verbindungen sind und die Einrichtung (80) zum Nachweis der spezifischen Verbindungen einen Stickoxid (NO)-Detektor umfaßt und worin der genannte dritte Pyrolysator (98) eine Einrichtung zur Reduktion von NO₂-Gas in einer hindurchgeleiteten Gas-Probe zu NO-Gas ohne Bildung von NO-Gas aus anderen Verbindungen, die in der genannten Gasprobe enthalten sind, enthält.

10. Vorrichtung nach Anspruch 9, in der in der Ausführungsform gemäß Anspruch 2 der genannte dritte Pyrolysator (93) eine Silber enthaltende Innenoberfläche aufweist.

11. Vorrichtung nach Anspruch 10, in der der genannte dritte Pyrolysator (98) ein aus Silber gebildetes Rohr enthält.

12. Vorrichtung nach Anspruch 3 oder nach irgendeinem davon abhängigen Anspruch, die umfaßt
eine Bypass-Zweigleitung (90), die den genannten dritten Pyrolysator (98), eine erste Strömungsleitung (116), die sich zwischen dem Gasstrom-Splitter (108) und dem Einlaß des genannten dritten Pyrolysators erstreckt, und eine zweite Strömungsleitung (104), die sich zwischen dem Auslaß des genannten dritten Pyrolysators und dem Einlaß des genannten Stickoxid-Detektors (80) erstreckt, enthält; und eine dritte Strömungsleitung (128), die mit dem Auslaß des genannten Ventils in Verbindung steht und sich mit der genannten zweiten Strömungsleitung (104) vereinigt.

13. Verfahren zum selektiven Nachweis (zur selektiven Bestimmung) spezifischer, gaschromatographisch voneinander trennbarer Verbindungen, das die folgenden Stufen umfaßt:
Injizieren einer Gasprobe, die ein Trägergas und Dämpfe (Gase) einer ersten Gruppe und einer zweiten Gruppe von gaschromatographisch voneinander trennbaren Verbindungen enthält, in einen ersten Gaschromatographen (60);
Abzug der Gasprobe zusammen mit getrennten Dämpfen (Gasen) aus dem ersten Gaschromatographen;
ausreichendes Erhitzen (62) der getrennten Gasprobe, um die Dämpfe (Gase) der ersten Gruppe von Verbindungen zu zersetzen, ohne die Dämpfe (Gase) der zweiten Gruppe von Verbindungen zu zersetzen;
Aufteilen (108) der erhitzen Gasprobe in eine erste Fraktion und in eine zweite Fraktion;
Einführen der zweiten Fraktion der genannten erhitzten Gasprobe in einen zweiten Gaschromatographen (64);
Nachweisen bzw. Bestimmen (80) der ersten Gruppe von Verbindungen in der genannten ersten Fraktion während eines ersten Zeitintervalls;
Abziehen der zweiten Fraktion mit getrennten Dämpfen (Gasen) aus dem zweiten Gaschromatographen;
ausreichendes Erhitzen (70) der abgetrennten zweiten Fraktion, um die Dämpfe (Gase) der genannten zweiten Gruppe von Verbindungen zu zersetzen; und
Nachweisen bzw. Bestimmen (80) der zweiten Gruppe von Verbindungen in der genannten abgetrennten zweiten Fraktion während eines zweiten Zeitintervalls.

14. Verfahren nach Anspruch 13, worin die erste Gruppe von Verbindungen Nitramine und Nitritester umfaßt und bei dem nach dem Erhitzen der abgetrennten Gasprobe und vor dem Nachweis (der Bestimmung) der ersten Gruppe von Verbindungen NO₂-Gas in der ersten Fraktion in NO-Gas umgewandelt wird durch Hindurchleiten der genannten ersten Fraktion durch ein Rohr, das eine mit dem Gas in Kontakt kommende Silber enthaltende Oberfläche aufweist und bei einer vorgegebenen Temperatur gehalten wird.

15. Verfahren nach Anspruch 14, worin die Umwandlungsstufe das Hindurchleiten der genannten ersten Fraktion durch ein aus Silber gebildetes Rohr umfaßt.

16. Verfahren nach Anspruch 13, das umfaßt das Konzentrieren der Dämpfe(Gase) der Verbindungen in einem Rohr, das ein gaschromatographisches Material enthält, vor der Injektionsstufe und worin die Injektionsstufe umfaßt das schnelle und genaue Erhitzen des Rohres und des gaschromatographischen Materials, während das Trägergas durch das Rohr strömt.

17. Verfahren nach einem der Ansprüche 13 bis 15, worin die Abzugsstufen jeweils ein schnelles Erhitzen der Gaschromatographen umfassen.

18. Verfahren nach einem der Ansprüche 13 bis 17, worin alle Stufen des genannten selektiven Nachweis- bzw. Bestimmungsverfahrens innerhalb einer Gesamtzeit von weniger als 30 s durchgeführt werden.

19. Verfahren nach einem der Ansprüche 13 bis 18, worin die zweite Fraktion mit den abgetrennten Dämpfen (Gasen) aus dem genannten zweiten Gaschromatographen (64) abgezogen wird durch schnelles Erhitzen des genannten zweiten Gaschromatographen während des zweiten Zeitintervalls.

20. Verfahren nach einem der Ansprüche 13 bis 19, worin das Erhitzen der abgetrennten Gasprobe und das Erhitzen der abgetrennten zweiten Fraktion in einem ersten Pyrolysator (62) bzw. in einem zweiten Pyrolysator (70) durchgeführt werden und die Aufteilung der genannten erhitzen Gasprobe in einem Gasstrom-Splitter (108) durchgeführt wird, der zwischen dem genannten ersten Pyrolysator und dem genannten zweiten Gaschromatographen (64) angeordnet ist.

21. Verfahren nach Anspruch 14, worin die genannten Nachweis- bzw. Bestimmungsstufen in einem einzigen NO-Detektor (80) durchgeführt werden und das Verfahren umfaßt das Einleiten des Abstroms aus dem Silber enthaltenden Rohr in den NO-Detektor während des genannten ersten Zeitintervalls und das Einleiten des Abstroms sowohl aus dem Silber enthaltenden Rohr als auch aus dem zweiten Pyrolysator (70) in den NO-Detektor während des genannten zweiten Zeitintervalls.

## Revendications

1. Appareil pour détecter sélectivement des vapeurs de composés spécifiques dans un échantillon de gaz, l'appareil comportant:
un premier chromatographe en phase gazeuse (60), un premier pyrolyseur (62), un second chromatographe en phase gazeuse (64) et un second pyrolyseur (70) reliés successivement en série;
un moyen (32) pour diriger vers ledit premier chromatographe en phase gazeuse (60) un échantillon de gaz contenant des vapeurs de composés spécifiques contenant de l'azote;
un moyen de détection (80) relié audit premier pyrolyseur (62) et audit second pyrolyseur (70), pour détecter les composés spécifiques dans l'effluent dudit premier pyrolyseur et dans l'effluent dudit second pyrolyseur; et
un diviseur d'écoulement (108) pour recevoir l'effluent dudit premier pyrolyseur (62) et pour diriger la première et la seconde partie dudit effluent, respectivement, vers le second chromatographe en phase gazeuse (64) et ledit moyen de détection (80).

2. Appareil selon la revendication 1, comportant en outre un troisième pyrolyseur (98); et dans lequel le diviseur d'écoulement (108) reçoit l'effluent dudit premier pyrolyseur (62) et dirige la première et la seconde partie dudit effluent respectivement vers ledit second chromatographe en phase gazeuse (64) et vers ledit troisième pyrolyseur (98); et dans lequel le moyen de détection (80) détecte les composés spécifiques dans l'effluent dudit troisième pyrolyseur et dans l'effluent dudit second pyrolyseur.

3. Appareil selon la revendication 1 ou la revendication 2, pour détecter des composés contenant de 1' azote, dans lequel ledit moyen de détection comprend un détecteur d'oxyde nitrique (80) relié audit troisième pyrolyseur (98), et dans lequel ledit appareil comporte en outre
(a) une pompe à vide (54) pour fournir un vide partiel dans ledit détecteur d'oxyde nitrique; et
(b) une valve (84) située en aval dudit second pyrolyseur, ladite valve pouvant être ajustée entre une première position dans laquelle ladite valve permet à l'effluent du second pyrolyseur (70) de passer vers ladite pompe à vide (54), et une seconde position dans laquelle ladite valve permet à l'effluent du second pyrolyseur de passer dans ledit détecteur d'oxyde nitrique (80).

4. Appareil selon l'une quelconque des revendications précédentes, comportant un moyen pour contrôler les fractions de l'effluent dudit premier pyrolyseur qui comportent ladite première et ladite seconde partie.

5. Appareil selon l'une quelconque des revendications précédentes, dans lequel ledit premier pyrolyseur (62) comporte un réchauffeur pouvant fonctionner pour chauffer un échantillon de gaz dirigé au-travers dudit premier pyrolyseur de telle sorte que des vapeurs d'un premier ensemble de composés spécifiques présents dans l'échantillon de gaz soient décomposées sans produire de vapeurs de décomposition d'un second ensemble de composés spécifiques présents dans l'échantillon de gaz.

6. Appareil selon la revendication 5, dans lequel ledit second pyrolyseur (70) comprend un réchauffeur pouvant fonctionner pour chauffer un échantillon de gaz dirigé au-travers dudit second pyrolyseur de telle sorte que ledit second ensemble de composés spécifiques présents dans l'échantillon de gaz soient décomposés.

7. Appareil selon l'une quelconque des revendications précédentes, dans lequel ledit moyen pour diriger un échantillon de gaz vers le premier chromatographe en phase gazeuse comprend
(a) un concentrateur de vapeur (32) dont la sortie est en communication avec l'entrée dudit premier chromatographe en phase gazeuse, et
(b) un moyen pour chauffer très rapidement ledit concentrateur de vapeur pendant qu'un gaz porteur est envoyé à travers ledit concentrateur de vapeur, de telle sorte que des vapeurs de composés spécifiques contenant de l'azote soient libérées du concentrateur de vapeurs et envoyées rapidement avec ledit gaz porteur dans ledit premier chromatographe en phase gazeuse.

8. Appareil selon la revendication 7, comprenant en outre un moyen pour chauffer rapidement ledit premier chromatographe en phase gazeuse (60) et ledit second chromatographe en phase gazeuse (64) pour effectuer une extraction rapide et séparée dans le temps de vapeurs contenues dans ledit chromatographe en phase gazeuse.

9. Appareil selon l'une quelconque des revendications précédentes, dans lequel lesdits composés spécifiques sont des composés contenant de l'azote, et le moyen (80) pour détecter des composés spécifiques comprend un détecteur d'oxyde nitrique (NO), et dans lequel ledit troisième pyrolyseur (98) comprend un moyen pour réduire en NO gazeux, le NO₂ gazeux présent dans un échantillon de gaz dirigé au travers de celui-ci, sans produire du NO gazeux à partir d'autres composants contenus dans ledit échantillon de gaz.

10. Appareil selon la revendication 9, dépendante de la revendication 2, dans lequel ledit troisième pyrolyseur (98) comprend une surface interne contenant de l'argent.

11. Appareil selon la revendication 10, dans lequel ledit troisième pyrolyseur (98) comprend un tube formé d'argent.

12. Appareil selon la revendication 3 ou une quelconque des revendications dépendantes de celle-ci, comportant
une branche de dérivation (90) comprenant ledit troisième pyrolyseur (98), une première conduite d'écoulement (116) s'étendant entre ledit diviseur d'écoulement (108) et l'entrée dudit troisième pyrolyseur, et une seconde conduite d'écoulement (104) s'étendant entre la sortie dudit troisième pyrolyseur et l'entrée dudit détecteur d'oxyde nitrique (80); et,
une troisième conduite d'écoulement (128) reliée à la sortie de ladite vanne et rejoignant ladite seconde conduite d'écoulement (104).

13. Procédé pour la détection sélective de composés d'un gaz spécifique, pouvant être séparés par chromatographie, comportant les étapes consistant à:
injecter dans un premier chromatographe en phase gazeuse (60) un échantillon de gaz comportant un gaz porteur et des vapeurs d'un premier ensemble et d'un second ensemble de composés gazeux pouvant être séparés par chromatographie;
extraire du premier chromatographe en phase gazeuse l'échantillon de gaz avec des vapeurs séparées;
chauffer suffisamment (62) l'échantillon de gaz séparé pour décomposer des vapeurs du premier ensemble sans décomposer des vapeurs du second ensemble;
diviser (108) l'échantillon de gaz chauffé en une première et une seconde fraction;
diriger la seconde fraction dudit échantillon de gaz chauffé vers un second chromatographe en phase gazeuse (64);
détecter (80), au cours d'un premier intervalle de temps, le premier ensemble de composants dans ladite première fraction;
extraire du second chromatographe en phase gazeuse la seconde fraction avec des vapeurs séparées;
chauffer (70) suffisamment la seconde fraction séparée pour décomposer des vapeurs dudit second ensemble; et
détecter (80), au cours d'un second intervalle de temps, le second ensemble de composés dans ladite seconde fraction séparée.

14. Procédé selon la revendication 13, dans lequel ledit premier ensemble de composés comprend des nitramines et des esters de nitrite, et comprenant, après le chauffage de l'échantillon de gaz séparé et avant la détection du premier ensemble de composés, la conversion du NO₂ gazeux présent dans la première fraction en NO gazeux, en faisant passer ladite première fraction à travers un tube présentant une surface de contact avec le gaz qui contient de l'argent et est maintenue à une température prédéterminée.

15. Procédé selon la revendication 14, dans lequel l'étape de conversion comprend le passage de ladite première fraction par un tube réalisé en argent.

16. Procédé selon la revendication 13, comprenant, avant l'étape d'injection, la concentration de vapeurs des composés dans un tube contenant du matériau pour chromatographie en phase gazeuse et dans lequel l'étape d'injection comprend le chauffage rapide et précis du tube et du matériau pour chromatographie en phase gazeuse pendant que le gaz porteur s'écoule dans le tube.

17. Procédé selon l'une quelconque des revendications 13 à 15, dans lequel lesdites étapes d'extraction comprennent chacune le chauffage rapide desdits chromatographes en phase gazeuse.

18. Procédé selon l'une quelconque des revendications 13 à 17, dans lequel toutes les étapes dudit procédé de détection sélective sont effectuées en une durée totale inférieure à trente secondes.

19. Procédé selon l'une quelconque des revendications 13 à 18, dans lequel la seconde fraction comportant des vapeurs séparées est extraite dudit second chromatographe en phase gazeuse (64) par chauffage rapide dudit second chromatographe en phase gazeuse au cours dudit second intervalle de temps.

20. Procédé selon l'une quelconque des revendications 13 à 19, dans lequel ledit chauffage dudit échantillon de gaz séparé et le chauffage de ladite seconde fraction séparée sont réalisés, respectivement, dans le premier pyrolyseur (62) et dans le second pyrolyseur (70), et la division dudit échantillon de gaz chauffé est effectuée dans un diviseur d'écoulement (108) disposé entre ledit premier pyrolyseur et ledit second chromatographe en phase gazeuse (64).

21. Procédé selon la revendication 14, dans lequel lesdites étapes de détection sont effectuées dans un détecteur de NO unique (80), et le procédé comprend l'étape consistant à faire passer l'effluent du tube contenant de l'argent vers le détecteur de NO au cours dudit premier intervalle de temps, et à faire passer les effluents du tube contenant de l'argent et du second pyrolyseur (70) vers le détecteur de NO au cours dudit second intervalle de temps.
